(19) Europäisches Patentamt
European Patent Office
Office européen des brevets

(11) **EP 3 492 836 A1**

(12) **EUROPEAN PATENT APPLICATION**
published in accordance with Art. 153(4) EPC

(43) Date of publication:
**05.06.2019 Bulletin 2019/23**

(51) Int Cl.:
**F25B 1/00** (2006.01)

(21) Application number: **17866016.3**

(22) Date of filing: **05.10.2017**

(86) International application number:
**PCT/JP2017/036392**

(87) International publication number:
**WO 2018/079226 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.10.2016 JP 2016213256**

(71) Applicant: **Mitsubishi Heavy Industries Thermal Systems, Ltd.**
**Tokyo 108-8215 (JP)**

(72) Inventors:
- **MURAKAMI Kenichi**
  **Tokyo 108-8215 (JP)**
- **IKEDA Masaki**
  **Tokyo 108-8215 (JP)**
- **OMURA Minemasa**
  **Tokyo 108-8215 (JP)**
- **ENYA Atsushi**
  **Tokyo 108-8215 (JP)**

(74) Representative: **Cabinet Beau de Loménie**
**158, rue de l'Université**
**75340 Paris Cedex 07 (FR)**

(54) **REFRIGERATION DEVICE AND REFRIGERATION SYSTEM**

(57)    This refrigeration device (3) is provided with: multiple compressors (31) each of which has an oil pod (315) storing a lubricant oil; a level sensor (318) which detects when the level of the lubricant oil in the oil pods (315) falls to a predetermined reference level (LS) ; a communication pipe (43) which allows communication between the oil pods (315) of the compressors (31); and a controller (100) which, when the level sensor (318) detects, in one of the multiple compressors (31), that the level has fallen to the reference level (LS), operates the multiple compressors (31) at mutually different rotation speeds.

FIG. 4

EP 3 492 836 A1

**Description**

Technical Field

The present invention relates to a refrigeration device and a refrigeration system.
Priority is claimed on Japanese Patent Application No. 2016-213256, filed October 31, 2016, the content of which is incorporated herein by reference.

Background Art

For example, in stores or the like, a plurality of refrigerating and freezing devices, such as a refrigerator, a freezer, and a showcase, which store or display goods, such as food and a drink, in a refrigerated state or frozen state, are used. The plurality of refrigerating and freezing devices receive supply of a low-temperature low-pressure liquid refrigerant from a separately provided condensing unit. Each refrigerating and freezing device cools goods by supplying the liquid refrigerant to an internal heat exchanger.
The condensing unit is a so-called refrigeration device. The condensing unit includes a compressor, a cooler (gas cooler), an expansion valve, and a receiver (gas-liquid separator). In the condensing unit, the refrigerant warmed by the external refrigerating and freezing device is compressed by the compressor. The compressed refrigerant is expanded in the expansion valve and turned into a low-pressure low-temperature refrigerant after being cooled in the cooler. The refrigerant brought into a gas-liquid two-phase state through the expansion valve is separated into a gaseous phase (gas refrigerant) and a liquid phase (liquid refrigerant) by the receiver. The separated liquid refrigerant is supplied to the external refrigerating and freezing device. On the other hand, the separated gas refrigerant is sent into the compressor and compressed again.
In the refrigerating and freezing device to which the liquid refrigerant is supplied from the condensing unit, the control of adjusting a cooling temperature at which goods are actually cooled is individually performed in accordance with a set temperature. For this reason, the refrigerating and freezing device includes an adjusting valve that adjusts the amount of the refrigerant to be supplied to each heat exchanger, and a controller that controls an opening degree of the adjusting valve. In the refrigerating and freezing device, when the cooling temperature reaches the set temperature, the adjusting valve is closed by the controller to reduce the amount of supply of the refrigerant to the heat exchanger.
Meanwhile, in order to maintain the lubricity in a part that supports a rotating body, such as a bearing, each of a plurality of compressors need to secure a certain amount of lubricant oil. In the case of the condensing unit including the plurality of compressors, a difference may occur between the amounts of the lubricant oil within the respective compressors in accordance with the operation conditions or the like of the respective compressors. Hence, it is necessary to prevent the amounts of the lubricant oil from excessively decreasing in some compressors during operation.
In contrast, PTL 1 describes a refrigeration cycle in which an oil return operation and an oil equalization operation are sequentially performed in a case where the discharge amount of the lubricant oil from each compressor exceeds a limit range thereof. In the refrigeration cycle, the discharge amount of the lubricant oil from the compressor is monitored on the basis of the addition or the like of the operation time of the compressor. Additionally, in the oil return operation, the lubricant oil included in the refrigerant discharged from each compressor is recovered. The oil equalization operation causes a pressure difference between housings of the plurality of compressors by making the flow rates of an intermediate pressure refrigerant supplied from injection circuits provided in the plurality of compressors different from each other. Accordingly, the oil equalization operation averages (equalizes) the amounts of the lubricant oil of the plurality of compressors.

Citation List

Patent Literature

[PTL 1] Japanese Unexamined Patent Application Publication No. 2010-139109

Summary of Invention

Technical Problem

As described above, in the configuration described in PTL 1, the discharge amount of the lubricant oil is monitored by performing an estimation on the basis of the addition or the like of the operation time of each compressor. In this case, the lubricant oil discharged from the compressor is included in the refrigerant discharged from the compressor. For this reason, depending on the discharge pressure, a discharge flow rate, and the like of the refrigerant, the amount of the lubricant oil to be actually discharged may fluctuate. Hence, there is a case where an error occurs between the actual amount of the lubricant oil within the compressor, and the estimation value. In a case where the actual amount of the lubricant oil within the compressor is smaller than the estimation value, there is a possibility that the lubricant oil may become insufficient and this may lead to a failure of the compressor.

Additionally, when the oil equalization operation is performed, the amount of the refrigerant discharged from the compressor decreases due to a pressure change within the compressor. For that reason, the operation efficiency of the condensing unit may decrease. Hence, if shifting to the oil equalization operation is made in a case where the estimation value of the amount of the lubricant oil becomes smaller than the actual amount of the lubricant oil, this leads to the loss of the operation efficiency.

From these, it is desired to accurately detect the amount of the lubricant oil within the compressor and equalize the amount of the lubricant oil between a plurality of compressors at a suitable timing.

The invention provides a refrigeration device and a refrigeration system capable of accurately detecting the amount of lubricant oil within a compressor and capable of equalizing the amounts of the lubricant oil between a plurality of the compressors at a suitable timing.

Solution to Problem

A refrigeration device related to a first aspect of the invention includes a plurality of compressors each having an oil pod that stores lubricant oil; a heat exchanger that condenses a refrigerant compressed in the compressor; an expansion valve that expands the refrigerant condensed in the heat exchanger; a level sensor that detects that a liquid level of the lubricant oil within each of the oil pods has fallen to a predetermined reference level; a communication pipe that allows communication between the oil pods of the plurality of compressors; and a controller that operates the plurality of compressors at mutually different rotation speeds in a case where the level sensor detects that the liquid level has fallen to the reference level in any one of the plurality of compressors.

According to such a configuration, in a case where the level sensor detects that the liquid level of the lubricant oil has fallen to the reference level in the oil pods provided in the respective compressors, a pressure difference occurs between the oil pods of the plurality of compressors if the plurality of compressors are operated at mutually different rotation speeds. By virtue of this pressure difference, the lubricant oil can be sent from an oil pod on a high-pressure side to an oil pod on a low-pressure side through the communication pipe, and the amounts of the lubricant oil can be equalized. Additionally, the liquid level of the lubricant oil within each oil pod is measured directly by the level sensor. That is, the amount of the lubricant oil is detected with the liquid level of the lubricant oil within the oil pod. Hence, rippling of the liquid level can also be suppressed, and the amount of the lubricant oil can be accurately detected.

Additionally, in the refrigeration device related to a second aspect of the invention based on the first aspect, the controller may make a rotation speed of the compressor including the oil pod, which is provided with the level sensor that detects that the liquid level has fallen to the reference level, higher than rotation speeds of the other compressors, in a case where the level sensor detects that the liquid level has fallen to the reference level in any one of the plurality of compressors.

By adopting such a configuration, a suction force into a sealed housing 310 from an oil pod on a side where the amount of the lubricant oil is smaller becomes high, and the pressure within the oil pod on the side where the amount of the lubricant oil is smaller falls earlier than an oil pod on a side where the amount of the lubricant oil is larger. Accordingly, the internal pressure of the oil pod with the smaller amount of the lubricant oil decreases compared to that of the oil pod with the larger amount of the lubricant oil. Hence, the lubricant oil is sent from the oil pod with the larger amount of the lubricant oil via the oil equalization pipe to the oil pod with the smaller amount of the lubricant oil. As a result, the amounts of the lubricant oil can be equalized with high accuracy between the plurality of compressors.

Additionally, in the refrigeration device related to a third aspect of the invention based on the first aspect or the second aspect, the controller may stop an operation in which the rotation speeds of the plurality of compressors are made different from each other in a case where an elapsed time after the level sensor detects that the liquid level has fallen to the reference level has reached a preset setup time or in a case where the level sensor detects that the liquid level has risen equal to or higher than the reference level.

By adopting such a configuration, the operation can be returned to a normal state at a suitable timing after the amounts of the lubricant oil are equalized between the plurality of compressors.

Additionally, in the refrigeration device related to a fourth aspect of the invention based on any one the first aspect to the third aspect, when the rotation speeds of the plurality of compressors are made different from each other, the controller may control the rotation speeds of the compressors such that a sum of the rotation speeds of the plurality of compressors in a state where the rotation speeds are made different from each other and a sum of the rotation speeds of the plurality of compressors in a state where the rotation speeds are not made different from each other by the controller are equal to each other.

By adopting such a configuration, it is possible to suppress that the amounts of the refrigerant discharged from the plurality of compressors fluctuates between an operational state when the oil equalizing processing of equalizing the amounts of the lubricant oil is performed and an operation state before the oil equalizing processing. Accordingly, it is possible to suppress that the refrigerant supply amount falls through the execution of the oil equalizing processing, and stable operation of the refrigeration device can be performed.

Additionally, in the refrigeration device related to a fifth aspect of the invention based on any one the first aspect to the fourth aspect, the compressors may include a first-stage compression section and a second-stage compression section, and the refrigerant may be carbon dioxide.

In this way, in the refrigeration device using carbon dioxide with a large pressure ratio for the refrigerant, the influence of flow of the refrigerant within the compressor is great in the case of the compressor including the first-stage compression section and the second-stage compression section. In such a configuration, it is particularly effective to provide the level sensor within each oil pod to detect the amount of the lubricant oil.

Additionally, a refrigeration system related to a sixth aspect of the invention includes the refrigeration device of any one of the first aspect to the fifth aspect; and a loading apparatus that is connected to the refrigeration device and has a load-side heat exchanger that exchanges heat with a liquid refrigerant to be supplied from the refrigeration device.

Advantageous Effects of Invention

According to the invention, it is possible to accurately detect the amount of the lubricant oil within the compressor and equalize the amounts of the lubricant oil between the plurality of compressors at a suitable timing.

Brief Description of Drawings

Fig. 1 is a schematic view illustrating the configuration of a refrigeration system and a refrigeration device related to an embodiment of the invention.
Fig. 2 is a view illustrating a circuit configuration of the above refrigeration device.
Fig. 3 is a circuit diagram illustrating a surrounding configuration of a compressor that constitutes the above refrigeration device.
Fig. 4 is a flowchart illustrating a flow of oil equalizing processing performed by controlling the rotation speed of the compressor in accordance with liquid level of lubricant oil within an oil pod, in the above refrigeration device.
Fig. 5 is a view illustrating a relationship between rotation speeds of compressors and pressure differences when the control according to the above flowchart is performed.

Description of Embodiments

Hereinafter, embodiments for carrying out a refrigeration device and a refrigeration system according to the invention will be described with reference to the accompanying drawings. However, the invention is not limited only to these embodiments.

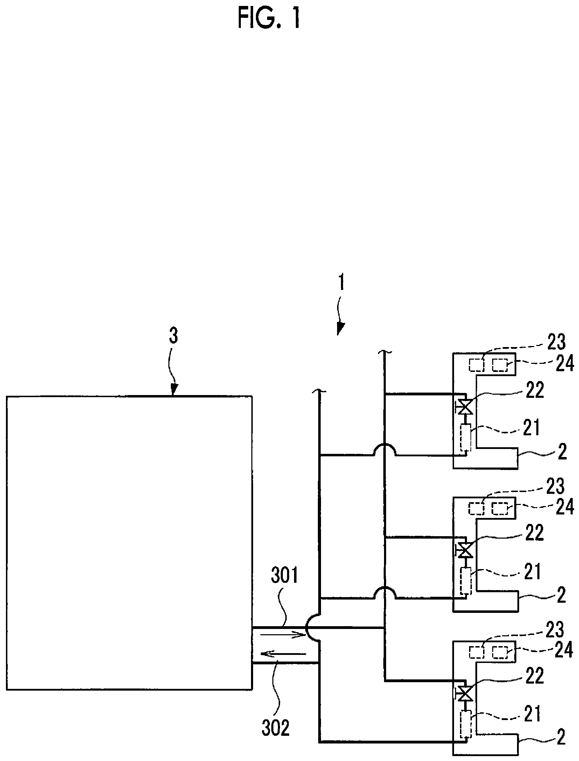

As illustrated in Fig. 1, a refrigeration system 1 includes a plurality (three in the present embodiment) loading apparatuses 2, and a condensing unit (refrigeration device) 3. In the present embodiment, the refrigeration system uses $CO_2$ (carbon dioxide) 1 as a refrigerant.

Each loading apparatus 2 is a refrigerating and freezing device, such as a refrigerator or a freezer, which cools or refrigerates and store goods and a showcase that cools or refrigerates and displays goods. The loading apparatus 2 receives supply of a liquid refrigerant from the condensing unit 3. The loading apparatus 2 includes a heat exchanger (load-side heat exchanger) 21, a control valve 22, a controller of the loading apparatus 23, and a temperature sensor 24.

The heat exchanger 21 exchanges heat with the liquid refrigerant supplied from the condensing unit 3, thereby cooling goods. The heat exchanger 21 returns the refrigerant after the heat exchange to the condensing unit 3.

The control valve 22 adjusts the flow rate of the liquid refrigerant supplied from the condensing unit 3, thereby adjusting the cooling temperature of goods.

On the basis of a set temperature set from the outside and a cooling temperature which is detected by the temperature sensor 24 and at which goods are actually cooled, the controller of the loading apparatus 23 adjusts the opening degree of the control valve 22 such that the internal cooling temperature approaches the set temperature.

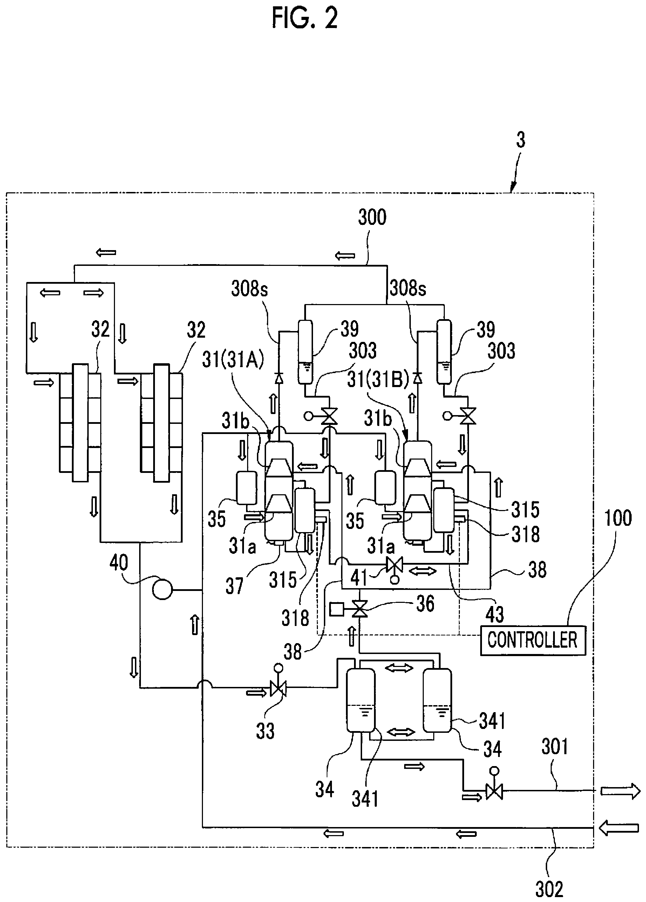

As illustrated in Fig. 2, the condensing unit 3 mainly includes a compressor 31, a gas cooler (heat exchanger) 32, an electronic expansion valve (expansion valve) 33, a receiver 34, a controller 100, an injection circuit 38, an oil separator 39, a pressure sensor 40, and an oil equalization pipe (communication pipe) 43. The compressor 31, the gas cooler 32, the electronic expansion valve 33, the receiver 34, and the oil separator 39 are coupled to each other by a refrigerant pipe 300.

The compressor 31 compresses the refrigerant supplied via an accumulator 35 by a suction pipe 302 from the loading apparatus 2. The compressor 31 discharges a high-pressure high-temperature refrigerant. In the refrigeration system 1 of the present embodiment, $CO_2$ having a larger compression ratio than fluorocarbon or the like is used as the refrigerant. For this reason, the compressor 31 is a two-stage compressor having a first-stage compression section 31a, and a second-stage compression section 31b. The compressor 31 has a temperature sensor 37 that detects the suction temperature of the refrigerant liquid and oil in the first-stage compression section 31a of the compressor 31. The refrigeration system 1 of the present embodiment includes a first compressor 31A and a second compressor 31B in parallel as the compressor 31.

The high-pressure high-temperature refrigerant is supplied to the gas cooler 32 via the oil separator 39 after being discharged from the compressor 31. The gas cooler 32 exchanges heat with the supplied high-pressure high-temperature refrigerant and the air sent by a blower (not illustrated), and condenses the refrigerant. In the present embodiment, a plurality of (two in the present embodiment) the gas coolers 32 are provided in parallel.

The electronic expansion valve 33 expands the refrigerant condensed in each gas cooler 32, and produces a low-pressure low-temperature refrigerant. The refrigerant expanded in the electronic expansion valve 33 is brought into a gas-liquid two-phase state.

The receiver 34 separates the refrigerant in the gas-liquid two-phase state expanded in the electronic expansion valve 33 into a gas refrigerant that is a gaseous-phase refrigerant, and a liquid refrigerant that is a liquid-phase refrigerant. In the present embodiment, a plurality of (two in the present embodiment) the receivers 34 are provided in parallel. Each receiver 34 has a tank 341 that contains the refrigerant in the gas-liquid phase state. A liquid sending pipe 301 and the injection circuit 38 are connected to the tank 341. The liquid refrigerant separated within the tank 341 is supplied to each external loading apparatus 2 through the liquid sending pipe 301.

Additionally, the gas refrigerant separated within the tank 341 of the receiver 34 is suctioned into the compressor 31 via the injection circuit 38. In the present embodiment, the injection circuit 38 is connected to the second-stage compression section 31b of the compressor 31. The injection circuit 38 supplies the gas refrigerant within the tanks 341 to the second-stage compression section 31b.

The injection circuit 38 is provided with an electromagnetic valve 36. The opening degree of the electromagnetic valve 36 is adjusted in accordance with the temperature of the refrigerant liquid and the oil detected in the temperature sensor 37, by the control of the controller 100. By opening and closing the electromagnetic valve 36, the flow rate of the gas refrigerant RG suctioned from the receiver 34 is adjusted.

The pressure sensor 40 measures the pressure of the refrigerant to be supplied to the compressor 31 via the loading apparatus 2. The pressure sensor 40 outputs the measurement result to the controller.

The controller 100 controls the rotation speed of the compressor 31. In accordance with the amount of lubricant oil of each of the plurality of compressors 31 (the first compressor 31A and the second compressor 31B), the controller 100 of the present embodiment adjusts the rotation speed of each compressor 31. Accordingly, the controller 100 executes the oil equalizing processing of equalizing the amounts of the lubricant oil between the plurality of compressors 31.

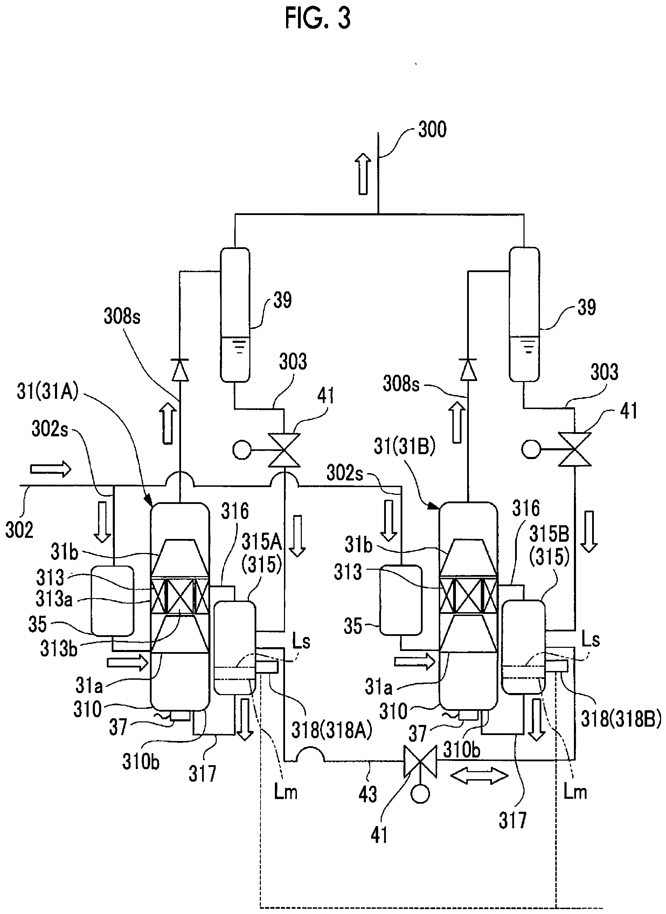

As illustrated in Fig. 3, the first compressor 31A and the second compressor 31B have the same structure. Each of the first compressor 31A and the second compressor 31B has a sealed housing 310, a first-stage compression section 31a, a second-stage compression section 31b, and a motor part 313.

The sealed housing 310 has a cylindrical shape. The first-stage compression section 31a is, for example, a rotary compression mechanism, and is disposed at a lower part within the sealed housing 310. The second-stage compression section 31b is, for example, a scroll compression mechanism, and is disposed above the second-stage compression section 31b within the sealed housing 310.

The motor part 313 is disposed between the first-stage compression section 31a and the second-stage compression section 31b within the sealed housing 310. The motor part 313 has a stator 313a and a rotor 313b, and drives the first-stage compression section 31a, and the second-stage compression section 31b with a magnetic field that is generated by rotating the stator 313a and the rotor 313b.

Two suction branch pipes 302s branched from the suction pipe 302 are connected to the sealed housing 310. Each of the suction branch pipes 302s is provided with the accumulator 35. The refrigerant, which has flowed into the suction branch pipe 302s from the suction pipe 302, flows into the sealed housing 310 through the accumulator 35. A discharge branch pipe 308s is connected to a top part of the sealed housing 310. The discharge branch pipe 308s is connected to the oil separator 39. The discharge branch pipe 308s connected to the first compressor 31A and the discharge branch pipe 308s connected to the second compressor 31B are joined to one refrigerant pipe 300 that leads to the gas coolers 32 through the separate oil separators 39. The refrigerants compressed in the first compressor 31A and the second compressor 31B are discharged from the discharge branch pipes 308s through the oil separators 39 to the refrigerant pipe 300.

Each oil separator 39 recovers the lubricant oil included in the refrigerant. One end of an oil return pipe 303 is connected to a bottom part of the oil separator 39. The other end of the oil return pipe 303 is connected to a side surface of an oil pod 315 to be described below. That is, the oil return pipe 303 communicates with the oil separator 39 and the oil pod 315. The oil return pipe 303 is provided with an opening-closing valve 41. By opening and closing the opening-closing valve 41 through the control of the controller 100, the amount of the lubricant oil returned from the oil separator 39 to the oil pod 315 can be adjusted.

Each of the first compressor 31A and the second compressor 31B has the oil pod 315 connected to the sealed housing 310, a first connecting pipe 316, a second connecting pipe 317, and a level sensor 318.

The oil pod 315 has a bottomed cylindrical shape. The oil pod 315 stores the lubricant oil to be used within the sealed housing 310. The oil pod 315 can store the lubricant oil equal to or more than an amount that is required to maintain lubricity in a bearing (not illustrated) that rotatably supports a rotating body of the first-stage compression section 31a, the second-stage compression section 31b, and the motor part 313. In addition, in the present embodiment, an oil pod 315 of the first compressor 31A is referred to as a first oil pod 315A. An oil pod 315 of the second compressor 31B is referred to as a second oil pod 315B.

The first connecting pipe 316 is connected to an upper part of the oil pod 315. The first connecting pipe 316 is connected to the sealed housing 310 so as to communicate with a medium-pressure portion between the first-stage compression section 31a and the second-stage compression section 31b. Specifically, the first connecting pipe 316 connects the upper part of the oil pod 315, and the motor part 313 and the second-stage compression section 31b to each other.

The second connecting pipe 317 is connected to a lower part of the oil pod 315. The second connecting pipe 317 connects a bottom part 310b of the sealed housing 310 and a bottom part of the oil pod 315 to each other.

During the operation of each compressor 31, the lubricant oil, which has flowed in order of the first-stage compression section 31a, the motor part 313, and the second-stage compression section 31b, flows into the oil pod 315 through the first connecting pipe 316 from the inside of the sealed housing 310 together with the refrigerant. The refrigerant and the lubricant oil, which have flowed into the oil pod 315 are separated into gas and liquid within the oil pod 315, and liquid lubricant oil accumulates on a lower side of the oil pod 315. The lubricant oil accumulating in the oil pod 315 is supplied from the lower part of the oil pod 315 through the second connecting pipe 317 to the bottom part 310b of the sealed housing 310. The lubricant oil supplied to the bottom part 310b of the sealed housing 310 flows again together with the refrigerant in order of the first-stage compression section 31a, the motor part 313, and the second-stage compression section 31b.

The level sensor 318 is attached to each of the first oil pod 315A and the second oil pod 315B. The level sensor 318 outputs a predetermined signal to the controller 100 in a case where the lubricant oil within the oil pod 315 has fallen to a predetermined reference level Ls. The reference level Ls is set to be above a minimum lower limit level Lm of the amount of the lubricant oil within the oil pod 315. Additionally, the reference level Ls is set to be below a connecting position with the oil equalization pipe 43 (to be described below) within the oil pod 315. Here, the minimum lower limit level Lm is set on the basis of the amount of the lubricant oil that needs to be stored at a minimum in order to maintain the lubricity of the bearing, which rotatably supports the rotating body of the first-stage compression section 31a, the second-stage compression section 31b, and the motor part 313, within the sealed housing 310. The level sensor 318 of the present embodiment is provided at a position that is horizontal with the reference level Ls.

As the level sensor 318, for example, an optical level switch can be used. The optical level switch includes a light-emitting part (not illustrated) that emits light toward a liquid surface of the lubricant oil within the oil pod 315, and a light-receiving part (not illustrated) that receives the reflected light of the light emitted in the light-emitting part from the liquid surface. In the optical level switch, the light emitted in the light-emitting part is not reflected in the light-receiving part in a state where the optical level switch is submerged in the lubricant oil, and the light emitted in the light-emitting part is reflected in the light-receiving part if the liquid level of lubricant oil falls to below the level sensor 318. The level sensor 318 detects that the liquid level of the lubricant oil has fallen to the reference level Ls by changing an input situation of the emitted light in a state where level sensor 318 is provided at a position that is horizontal with the reference level Ls.

In this embodiment, in a case where the liquid level of the lubricant oil within the oil pod 315 does not fall to the reference level Ls, the output signal from the level sensor 318 to the controller 100 is ON. On the contrary, in a case where the liquid level has fallen to the reference level Ls, the output signal from the level sensor 318 to a controller 100 is turned OFF.

Additionally, the first oil pod 315A and the second oil pod 315B are connected to each other via the oil equalization pipe 43. The oil equalization pipe 43 is connected to side surfaces of the first oil pod 315A and the second oil pod 315B. Specifically, the oil equalization pipe 43 is connected to the first oil pod 315A and the second oil pod 315B, respectively, above a position where the level sensor 318 is attached and below the connecting position with the oil return pipe 303. Additionally, the oil equalization pipe 43 is provided with the opening-closing valve 41.

Hereinafter, the control contents of the controller 100 will be described in detail.

Here, in the following description, the level sensor 318 provided at the first oil pod 315A is referred to as a first level sensor 318A. The level sensor 318 provided at the second oil pod 315B is referred to as a second level sensor 318B.

The controller 100 starts the compressor 31 if the condensing unit 3 is started. The controller 100 operates the compressor 31 between a predetermined upper limit rotation speed and a predetermined lower limit rotation speed.

Additionally, the controller 100 raises the rotation speed of the compressor 31 when the pressure of the refrigerant input from the pressure sensor 40 is equal to or higher than a predetermined pressure target value. Accordingly, the pressure of the refrigerant to be supplied to the compressor 31 from the loading apparatus 2 decreases.

Additionally, in a case where the pressure of the refrigerant to be supplied to the compressor 31 has reached the pressure target value, the controller 100 stops a rise in the rotation speed of the compressor 31, and is rotated at a predetermined steady rotation speed.

The controller 100 stops the operation of the compressor 31 in a case where the pressure of the refrigerant to be supplied to the compressor 31 is equal to or lower than a predetermined pressure lower limit value.

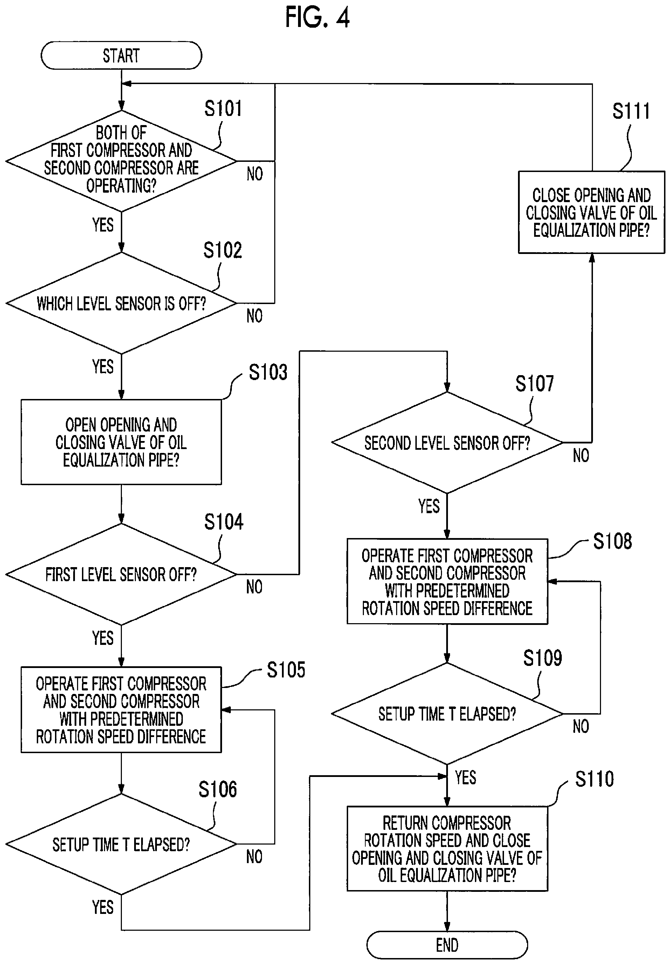

The controller 100 executes the oil equalization control by controlling the rotation speed of the compressor 31 on the basis of the liquid level of the oil pod 315. Specifically, as illustrated in Fig. 4, first, the controller 100 determines whether or not both the first compressor 31A and the second compressor 31B are operating (Step S101). In a case where it is determined that both the first compressor 31A and the second compressor 31B are not operating or only one is operating, the controller 100 repeats Step S101 whenever a certain time elapses.

After it is determined that both the first compressor 31A and the second compressors 31B are operating or only one is operating, the controller 100 further determines whether or not the output signal from the first level sensor 318A or the second level sensor 318B is turned OFF (Step S102).

In a case where both the first level sensor 318A and the second level sensor 318B are ON, the liquid level of lubricant oil is located above each of the first level sensor 318A and the second level sensor 318B in the first oil pod 315A and the second oil pod 315B. In this state, since the oil equalizing processing is unnecessary, the processing returns to Step S101.

In Step S102, in a case where the output signal from the first level sensor 318A or the second level sensor 318B is OFF, the liquid level of lubricant oil is located below the first level sensor 318A or the second level sensor 318B at least one of the first oil pod 315A and the second oil pod 315B. That is, a difference occurs between the amounts of the lubricant oils stored in the first oil pod 315A and the second oil pod 315B. Thus, in a case where the output signal from the first level sensor 318A or the second level sensor 318B is OFF, the controller 100 opens the opening-closing valve 41 of the oil equalization pipe 43 (Step S103). By opening the opening-closing valve 41, the first oil pod 315A and the second oil pod 315B communicate with each other by the oil equalization pipe 43.

Thereafter, the controller 100 determines whether or not the output signal from the first level sensor 318A is OFF (Step S104). In a case where the output signal from the first level sensor 318A is OFF, the level of the lubricant oil within the first oil pod 315A falls to a position below the first level sensor 318A. That is, the amount of the lubricant oil stored in the first oil pod 315A is smaller than that in the second oil pod 315B.

In this case, the controller 100 performs an operation such that the rotation speed of the first compressor 31A corresponding to the first level sensor 318A of which the output signal is OFF is made higher than the rotation speed of the second compressor 31B (Step S105). The controller 100 performs a control such that the rotation speed of the first compressor 31A is made higher than the rotation speed of the second compressor 31B by a preset rotation speed difference dr. Here, the controller 100 controls the rotation speed difference dr to be as high as, for example, 1 rps to 100 rps, preferably 10 rps to 50 rps, and particularly preferably 20 rps.

In this case, it is preferable to adjust the discharge amounts of the refrigerant from the first compressor 31A and the second compressor 31B so as not to fluctuate immediately before the rotation speeds of the first compressor 31A and the second compressor 31B in Step S105 and after the rotation speeds are adjusted. Thus, the controller 100 makes a sum (R10 + R20) of a rotation speed R10 of the first compressor 31A and a rotation speed R20 of the second compressor 31B before the adjustment of the rotation speed and a sum (R11 + R21) of a rotation speed R11 of the first compressor 31A and a rotation speed R21 of the second compressor 31B after the adjustment of the rotation speed equal to each other ((Rll + R21) = (R10 + R20)).

That is, it is preferable that a relationship between the rotation speed R11 of the first compressor 31A after the adjustment of the rotation speed and the rotation speed 21 of the second compressor 31B after the adjustment of the rotation speed satisfies the following two equations.

$$R11 \ = \ R10 \ + \ dr/2 \quad \cdots \quad (Equation \ 1)$$

$$R21 \ = \ R20 \ - \ dr/2 \quad \cdots \quad (Equation \ 2)$$

As a specific example, in a case where the rotation speed R10 of the first compressor 31A equals 50 rps before the adjustment of the rotation speed, the rotation speed R20 of the second compressor 31B before the adjustment of the rotation speed equals 50 rps, the preset rotation speed difference dr between the first compressor 31A and the second compressor 31B equals 20 rps, the rotation speed R11 of the first compressor 31A after the adjustment of the rotation speed equals 50 + 10 = 60 rps and the rotation speed R21 of the second compressor 31B after the adjustment of the rotation speed equals 50 - 10 = 40 rps.

After the rotation speeds of the first compressor 31A and the second compressor 31B are adjusted in Step S105, the controller 100 continues the operation of the first compressor 31A and the second compressor 31B at the rotation speed after the adjustment until a preset setup time T elapses (Step S106). That is, the first compressor 31A and the second compressor 31B are operated by the setup time T while maintaining a predetermined rotation speed difference. Here, the setup time T is set on the basis of a time that is taken until upward and downward displacements of the liquid level of the lubricant oil within the first oil pod 315A and the second oil pod 315B falls within a predetermined range. Here, the setup time T is, for example, 1 minute to 10 minutes, preferably, 2 minutes to 5 minutes, and particularly preferably about 3 minutes.

If the setup time T has elapsed, the controller 100 returns the rotation speed R11 of the first compressor 31A and the rotation speed R21 of the second compressor 31B to the rotation speed R10 and the rotation speed R20 before the rotation speed adjustment Step S105 is performed. Further, the controller 100 closes the opening-closing valve 41 of the oil equalization pipe 43 and cuts off the circulation of the lubricant oil within the oil equalization pipe 43 (Step S110).

Additionally, in the above Step S104, in a case where it is determined that the output signal from the first level sensor 318A is ON, the controller 100 determines whether or not the output signal from the second level sensor 318B is OFF (Step S107).

In a case where the output signal from the second level sensor 318B is OFF, the level of the lubricant oil within the oil pod 315 of the second compressor 31B falls to a position below the second level sensor 318B. That is, the amount of the lubricant oil stored in the second oil pod 315B is smaller than that in the first oil pod 315A.

In this case, the controller 100 performs an operation such that the rotation speed of the second compressor 31B corresponding to the second level sensor 318B of which the output signal is OFF is made higher than the rotation speed of the first compressor 31A (Step S108). Similarly to Step 105, the controller 100 performs a control such that the rotation speed of the second compressor 31B is made higher than the rotation speed of the first compressor 31A by the rotation speed difference dr.

In this case, it is preferable to adjust the discharge amounts of the refrigerant from the second compressor 31B and the first compressor 31A so as not to fluctuate immediately before the rotation speeds of the second compressor 31B and the first compressor 31A in Step S108 and after the rotation speeds are adjusted. Thus, similarly to Step S105, the controller 100 makes a sum (R20 + R10) of the rotation speed R20 of the second compressor 31B and the rotation speed R10 of the first compressor 31A before the adjustment of the rotation speed and a sum (R21 + R11) of the rotation speed R21 of the second compressor 31B and the rotation speed R11 of the first compressor 31A after the adjustment of the rotation speed equal to each other ((R20 + R10) = (R21 + R11)).

After the rotation speeds of the second compressor 31B and the first compressor 31A are adjusted in Step S108, the controller 100 continues the operation of the first compressor 31A and the second compressor 31B at the rotation speed after the adjustment until the preset setup time T elapses (Step S109). That is, the first compressor 31A and the second compressor 31B are operated by the setup time T while maintaining the predetermined rotation speed difference. Here, the setup time T in Step S108 is the same as that in Step S106.

If the setup time T has elapsed, the controller 100 returns the rotation speed R11 of the first compressor 31A and the rotation speed R21 of the second compressor 31B to the rotation speed R10 and the rotation speed R20 before the rotation speed adjustment Step S108 is performed. Further, the controller 100 closes the opening-closing valve 41 of the oil equalization pipe 43 and cuts off the circulation of the lubricant oil within the oil equalization pipe 43 (Step S110).

The controller 100 repeatedly executes the processing of Steps S101 to S110 as described above at every predetermined time during the operation of the compressor 31. Additionally, in a case where the second level sensor 318B is ON, the circulation of the lubricant oil within the oil equalization pipe 43 is cut off in Step S107 (Step S111).

By performing the control as described above by the controller 100, in a case where the amount of the lubricant oil within the oil pod 315 is smaller than the level sensor 318 in one of the first compressor 31A and the second compressor 31B, the rotation speeds of the first compressor 31A and the second compressor 31B are changed so as to be different from each other. As a result, a pressure difference occurs between the inside of the sealed housing 310 of the first compressor 31A and the inside of the sealed housing 310 of the second compressor 31B. For that reason, a pressure difference also occurs between a space within the first oil pod 315A connected to the sealed housing 310 of the first compressor 31A and a space within the second oil pod 315B connected to the sealed housing 310 of the second compressor 31B. Accordingly, the lubricant oil can be made to flow from a high-speed rotational side (high-pressure side) to a low-speed rotational side (low-pressure side) between the first oil pod 315A and the second oil pod 315B that communicates with each other by the oil equalization pipe 43. Accordingly, the amounts of the lubricant oil are equalized between the first compressor 31A and the second compressor 31B.

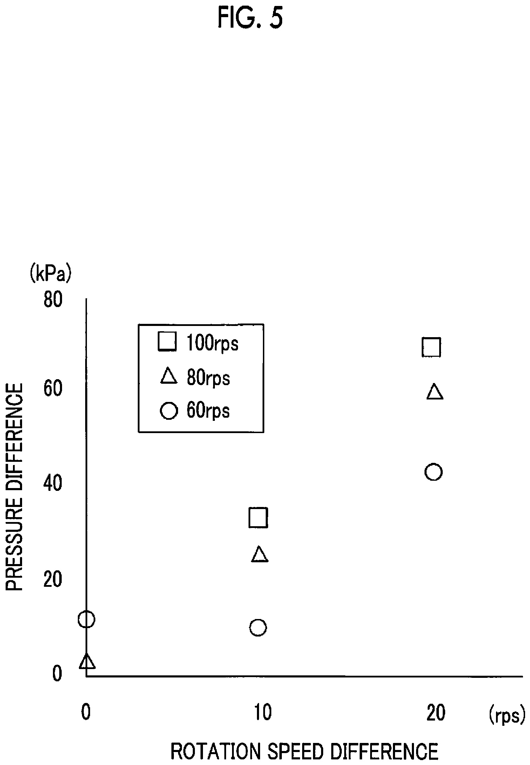

Fig. 5 is a view illustrating pressure differences occurring between the first oil pod 315A and the second oil pod 315B when the rotation speeds of the first compressor 31A and the second compressor 31B are made different from each other in the actual condensing unit 3.

Here, the rotation speeds of the first compressor 31A and the second compressor 31B on the high-speed rotational side were set to three types of 100 rps, 80 rps, and 60 rps. Additionally, the differences between the rotation speeds on the high-speed rotational side and the low-speed rotational side were set to two types of 10 rps and 20 rps. As a result, as illustrated in Fig. 5, the pressure differences occur between the first oil pod 315A and the second oil pod 315B by changing the rotation speeds on the first compressor 31A and the second compressor 31B. Additionally, as the rotation speed on the high-speed rotational side is higher, a pressure difference is larger between the first oil pod 315A and the second oil pod 315B. Moreover, as a difference between the rotation speeds is larger the first compressor 31A and the second compressor 31B, the pressure difference is larger between the first oil pod 315A and the second oil pod 315B.

According to the condensing unit 3 and the refrigeration system 1 as described above, in a case where the level sensor 318 detects that the liquid level of the lubricant oil has fallen to the reference level Ls in the first oil pod 315A and the second oil pod 315B, a pressure difference is caused by operating the plurality of compressors 31 at mutually different rotation speeds. In accordance with this pressure difference, a pressure difference also occurs between the first oil pod 315A and the second oil pod 315B. For that reason, the lubricant oil is sent from a high-pressure side out of the first oil pod 315A and the second oil pod 315B to a low-pressure side thereof through the oil equalization pipe 43. Accordingly, the amounts of the lubricant oil can be equalized between the first compressor 31A and the second compressor 31B.

Additionally, the liquid level of the lubricant oil within each oil pod 315 is measured directly by the level sensor 318. That is, the amount of the lubricant oil is detected with the liquid level of the lubricant oil within the oil pod 315. For that reason, the amount of the lubricant oil can be detected without being influenced by the flow of the refrigerant within the sealed housing 310. Hence, rippling of the liquid level can also be suppressed, and the amount of the lubricant oil can be accurately detected. Accordingly, the amount of the lubricant oil within the compressor 31 can be accurately detected, and the amounts of the lubricant oil between the plurality of compressors 31 can be equalized at a suitable timing.

Additionally the rotation speed of the compressor 31 corresponding to the oil pod 315 provided with the level sensor 318 that detects that the liquid level has fallen to the reference level Ls is made higher than the rotation speed of other compressors 31. Accordingly, a suction force into the sealed housing 310 from an oil pod 315 on a side where the amount of the lubricant oil is slightly smaller becomes high, and the pressure within the oil pod 315 on the side where the amount of the lubricant oil is smaller falls earlier than an oil pod 315 on a side where the amount of the lubricant oil is larger. Accordingly, the internal pressure of the oil pod 315 with the smaller amount of the lubricant oil decreases compared to that of the oil pod 315 with the larger amount of the lubricant oil.

Specifically, in a case where the amount of the lubricant oil of the first oil pod 315A is small, the rotation speed of the first compressor 31A becomes high. As a result, the pressure within the sealed housing 310 of the first compressor 31A becomes higher than the pressure within the sealed housing 310 of the first compressor 31A. For that reason, a suction force into the sealed housing 310 of the first compressor 31A from the first oil pod 315A becomes higher than a suction force into the sealed housing 310 of the second compressor 31B from the second oil pod 315B. Accordingly, the pressure within the first oil pod 315A decreases compared to the pressure within the second oil pod 315B. Hence, the lubricant oil is sent from the second oil pod 315B with the larger amount of the lubricant oil via the oil equalization pipe 43 to the first oil pod 315A with the smaller amount of the lubricant oil. As a result, the amounts of the lubricant oil can be equalized with high accuracy between the first compressor 31A and the second compressor 31B.

Additionally, the operation (oil equalizing processing) in which the rotation speeds of the first compressor 31A and the second compressor 31B are made different from each other is stopped after the elapse of the setup time T. By adopting such a configuration, the operation can be returned to a normal operational state at a suitable timing after the amounts of the lubricant oil are equalized between the first compressor 31A and the second compressor 31B.

When the rotation speeds of the first compressor 31A and the second compressor 31B are changed, the controller 100 keeps the sum (R11 + R21) of the rotation speeds (R11, R21) of the first compressor 31A and the second compressor 31B constant before and after the change. For that reason, it is possible to suppress that the amounts of the refrigerant discharged from the first compressor 31A and the second compressor 31B fluctuates between an operational state when the oil equalizing processing of equalizing the amounts of the lubricant oil and a normal operation state before the oil equalizing processing. Accordingly, it is possible to suppress that the refrigerant supply amount falls during the execution of the oil equalizing processing, and stable operation of the condensing unit 3 can be performed.

Moreover, in the condensing unit 3 using carbon dioxide with a large pressure ratio for the refrigerant, the influence of flow of the refrigerant within the compressor 31 is great in the case of the compressor 31 including the first-stage compression section 31a and the second-stage compression section 31b. In such a configuration, it is particularly effective to provide the level sensor 318 of each oil pod 315 to detect the amount of the lubricant oil.

Although the embodiment of the invention has been described above in detail with reference to the drawings, the respective components, combinations thereof, or the like in the embodiment are exemplary. Additions, omissions, substitutions, and other modifications of the components can be made without departing from the spirit of the invention. Additionally, the invention is not limited by the embodiment, and is limited only by the scope of the claims.

Additionally, in the above embodiment and each modification example, the control by the controller 100 is not limited to one exemplified above, and the processing order may be changed or some kinds of processing may be omitted. Specifically, in the above embodiment, the controller 100 stops the operation in which the rotation speeds of the plurality of compressors 31 are made different from each other in a case where the elapsed time after the level sensor 318 detects that the liquid level has fallen to the reference level Ls has reached the preset setup time T. However, the invention is not limited to this. For example, in a case where the level sensor 318 detects that the liquid level has risen equal to or higher than the reference level Ls after the rotation speeds of the plurality of compressors 31 are made different from each other, the operation in which the rotation speeds of the plurality of compressors 31 are made different from each other may be stopped.

Additionally, in the above embodiment, the refrigeration system 1 includes the plurality of loading apparatus 2 and the condensing unit 3. However, the number of loading apparatuses 2 is not limited at all. It is obvious that the plurality of loading apparatuses 2 may not need to be of the same type, and a plurality of types of loading apparatuses 2 may be provided in a mixed manner.

Moreover, the refrigeration system 1 may be a unit having the loading apparatuses 2 and the condensing unit 3 integrally. As such a unit, there are, for example, vending machines for beverages or the like.

Industrial Applicability

According to the above refrigeration device and the above refrigeration system, it is possible to accurately detect the amount of the lubricant oil within a compressor and equalize the amounts of the lubricant oil between a plurality of compressors at a suitable timing.

Reference Signs List

| | |
|---|---|
| 1: | REFRIGERATION SYSTEM |
| 2: | LOADING APPARATUS |
| 3: | CONDENSING UNIT (REFRIGERATION DEVICE) |
| 21: | HEAT EXCHANGER (LOAD-SIDE HEAT EXCHANGER) |
| 22: | CONTROL VALVE |
| 23: | CONTROLLER OF LOADING APPARATUS |
| 24: | TEMPERATURE SENSOR |
| 31: | COMPRESSOR |
| 31A: | FIRST COMPRESSOR |
| 31B: | SECOND COMPRESSOR |
| 31a: | FIRST-STAGE COMPRESSION SECTION |
| 31b: | SECOND STAGE COMPRESSION SECTION |
| 32: | GAS COOLER (HEAT EXCHANGER) |
| 33: | ELECTRONIC EXPANSION VALVE (EXPANSION VALVE) |
| 34: | RECEIVER |
| 35: | ACCUMULATOR |
| 36: | ELECTROMAGNETIC VALVE |
| 37: | TEMPERATURE SENSOR |
| 38: | INJECTION CIRCUIT |
| 39: | OIL SEPARATOR |
| 41: | OPENING-CLOSING VALVE |
| 43: | OIL EQUALIZATION PIPE (COMMUNICATION PIPE) |
| 100: | CONTROLLER |
| 300: | REFRIGERANT PIPE |
| 301: | LIQUID SENDING PIPE |
| 302: | SUCTION PIPE |
| 302s: | SUCTION BRANCH PIPE |
| 303: | OIL RETURN PIPE |

308s: DISCHARGE BRANCH PIPE
310: SEALED HOUSING
310b: BOTTOM PART
313: MOTOR PART
313a: STATOR
313b: ROTOR
315: OIL POD
315A: FIRST OIL POD
315B: SECOND OIL POD
316: FIRST CONNECTING PIPE
317: SECOND CONNECTING PIPE
318: LEVEL SENSOR
318A: FIRST LEVEL SENSOR
318B: SECOND LEVEL SENSOR
341: TANK
Lm: MINIMUM LOWER LIMIT LEVEL
Ls: REFERENCE LEVEL
T: SETUP TIME
dr: ROTATION SPEED DIFFERENCE

**Claims**

1. A refrigeration device comprising:

   a plurality of compressors each having an oil pod that stores lubricant oil;
   a heat exchanger that condenses a refrigerant compressed in the compressor;
   an expansion valve that expands the refrigerant condensed in the heat exchanger;
   a level sensor that detects that a liquid level of the lubricant oil within each of the oil pods has fallen to a predetermined reference level;
   a communication pipe that allows communication between the oil pods of the plurality of compressors; and
   a controller that operates the plurality of compressors at mutually different rotation speeds in a case where the level sensor detects that the liquid level has fallen to the reference level in any one of the plurality of compressors.

2. The refrigeration device according to Claim 1,
   wherein the controller makes a rotation speed of the compressor including the oil pod, which is provided with the level sensor that detects that the liquid level has fallen to the reference level, higher than rotation speeds of the other compressors, in a case where the level sensor detects that the liquid level has fallen to the reference level in any one of the plurality of compressors.

3. The refrigeration device according to Claim 1 or 2,
   wherein the controller stops an operation in which the rotation speeds of the plurality of compressors are made different from each other in a case where an elapsed time after the level sensor detects that the liquid level has fallen to the reference level has reached a preset setup time or in a case where the level sensor detects that the liquid level has risen equal to or higher than the reference level.

4. The refrigeration device according to any one of Claims 1 to 3,
   wherein when the rotation speeds of the plurality of compressors are made different from each other, the controller controls the rotation speeds of the compressors such that a sum of the rotation speeds of the plurality of compressors in a state where the rotation speeds are made different from each other and a sum of the rotation speeds of the plurality of compressors in a state where the rotation speeds are not made different from each other by the controller are equal to each other.

5. The refrigeration device according to any one of Claims 1 to 4,
   wherein the compressors include a first-stage compression section and a second-stage compression section, and
   wherein the refrigerant is carbon dioxide.

6. A refrigeration system comprising:

the refrigeration device according to any one of Claims 1 to 5; and
a loading apparatus that is connected to the refrigeration device and has a load-side heat exchanger that exchanges heat with a liquid refrigerant to be supplied from the refrigeration device.

**Amended claims under Art. 19.1 PCT**

1.  (Amended) A refrigeration device comprising:

    a plurality of compressors each having an oil pod that stores lubricant oil and a housing that is connected to the oil pod and houses a compression section and a motor therein;
    a heat exchanger that condenses a refrigerant compressed in the compressor;
    an expansion valve that expands the refrigerant condensed in the heat exchanger;
    a level sensor that detects that a liquid level of the lubricant oil within each of the oil pods has fallen to a predetermined reference level;
    a communication pipe that allows communication between the oil pods of the plurality of compressors; and
    a controller that operates the plurality of compressors at mutually different rotation speeds in a case where the level sensor detects that the liquid level has fallen to the reference level in any one of the plurality of compressors.

2.  The refrigeration device according to Claim 1,
    wherein the controller makes a rotation speed of the compressor including the oil pod, which is provided with the level sensor that detects that the liquid level has fallen to the reference level, higher than rotation speeds of the other compressors, in a case where the level sensor detects that the liquid level has fallen to the reference level in any one of the plurality of compressors.

3.  The refrigeration device according to Claim 1 or 2,
    wherein the controller stops an operation in which the rotation speeds of the plurality of compressors are made different from each other in a case where an elapsed time after the level sensor detects that the liquid level has fallen to the reference level has reached a preset setup time or in a case where the level sensor detects that the liquid level has risen equal to or higher than the reference level.

4.  The refrigeration device according to any one of Claims 1 to 3,
    wherein when the rotation speeds of the plurality of compressors are made different from each other, the controller controls the rotation speeds of the compressors such that a sum of the rotation speeds of the plurality of compressors in a state where the rotation speeds are made different from each other and a sum of the rotation speeds of the plurality of compressors in a state where the rotation speeds are not made different from each other by the controller are equal to each other.

5.  The refrigeration device according to any one of Claims 1 to 4,
    wherein the compressors include a first-stage compression section and a second-stage compression section, and
    wherein the refrigerant is carbon dioxide.

6.  A refrigeration system comprising:

    the refrigeration device according to any one of Claims 1 to 5; and
    a load device that is connected to the refrigeration device and has a load-side heat exchanger that exchanges heat with a liquid refrigerant to be supplied from the refrigeration device.

# FIG. 1

# FIG. 2

## FIG. 3

# FIG. 4

# FIG. 5

**EP 3 492 836 A1**

<table>
<tr><td colspan="2" align="center">INTERNATIONAL SEARCH REPORT</td><td colspan="2">International application No.<br>PCT/JP2017/036392</td></tr>
<tr><td colspan="4">A.   CLASSIFICATION OF SUBJECT MATTER<br>Int.Cl.  F25B1/00(2006.01)i</td></tr>
<tr><td colspan="4">According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>Int.Cl.  F25B1/00</td></tr>
<tr><td colspan="4">Documentation searched other than minimum documentation to the extent that such documents are included in the fields searched<br>Published examined utility model applications of Japan    1922–1996<br>Published unexamined utility model applications of Japan  1971–2017<br>Registered utility model specifications of Japan          1996–2017<br>Published registered utility model applications of Japan  1994–2017</td></tr>
<tr><td colspan="4">Electronic data base consulted during the international search (name of data base and, where practicable, search terms used)</td></tr>
<tr><td colspan="4">C.   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>Y</td><td colspan="2">JP 2011–226714 A (MITSUBISHI HEAVY INDUSTRIES, LTD.)<br>10 November 2011, paragraphs [0031]–[0038], fig. 1–2<br>(Family: none)</td><td>1–6</td></tr>
<tr><td>Y</td><td colspan="2">WO 2010/021137 A1 (PANASONIC CORP.) 25 February 2010,<br>paragraphs [0070]–[0076], [0081], fig. 1, 5–6 & US<br>2011/0138831A1, fig. 1, 5–6, paragraphs [0103]–[0109],<br>[0115] & EP 2320160 A1 & CN 102124285 A</td><td>1–6</td></tr>
</table>

☒  Further documents are listed in the continuation of Box C.    ☐  See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| 01 December 2017 (01.12.2017) | 12 December 2017 (12.12.2017) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2017/036392

C (Continuation). DOCUMENTS CONSIDERED TO BE RELEVANT

| Category* | Citation of document, with indication, where appropriate, of the relevant passages | Relevant to claim No. |
|---|---|---|
| A | JP 1-193088 (TOSHIBA CORP.) 03 August 1989, page 4, upper right column, line 4 to lower right column, line 15, fig. 1, 4-5 (Family: none) | 1-6 |
| A | JP 1-203848 A (TOSHIBA CORP.) 16 August 1989, page 3, lower left column, line 14 to page 4, upper right column, line 20, fig. 1-4 (Family: none) | 1-6 |
| A | JP 2001-201219 A (TOSHIBA CARRIER CORPORATION) 27 July 2001, fig. 1 & US 2003/0066302 A1, fig. 1 & AU 2706301 A & BR 104148 A & TW 508425 B & ES 2228796 T & CN 1363026 A & KR 10-2001-0112358 A | 1-6 |

Form PCT/ISA/210 (continuation of second sheet) (January 2015)

**REFERENCES CITED IN THE DESCRIPTION**

**Patent documents cited in the description**

- JP 2016213256 A
- JP 2010139109 A